Europäisches Patentamt

European Patent Office

Office européen des brevets

(11) Veröffentlichungsnummer: **0 081 046**
**A2**

(12) # EUROPÄISCHE PATENTANMELDUNG

(21) Anmeldenummer: 82108824.2

(22) Anmeldetag: 24.09.82

(51) Int. Cl.³: **F 24 D 5/00**

(30) Priorität: 29.09.81 DE 3138638

(43) Veröffentlichungstag der Anmeldung:
15.06.83 Patentblatt 83/24

(84) Benannte Vertragsstaaten:
AT BE CH DE FR GB IT LI LU NL SE

(71) Anmelder: Steuler, Norbert, Dr.
Im Herrengarten 30
D-5414 Vallendar(DE)

(72) Erfinder: Steuler, Norbert, Dr.
Im Herrengarten 30
D-5414 Vallendar(DE)

(74) Vertreter: Hemmerich, Friedrich Werner
Patentanwälte
HEMMERICH-MÜLLER-GROSSE-POLLMEIER Berliner
Allee 41
D-4000 Düsseldorf 1(DE)

(54) Brennhilfsmittelbesatz für das einlagige Brennen Keramischer Formlinge (Fliesen).

(57) Brennhilfsmittelaufbau für das einlagige Brennen keramischer Formlinge (Fliesen oder andere Platten) bei dem
oberhalb der auf der Plattform des Brennwagens aufliegenden Wärmedämmschicht Stützständer und Tragkörper für
die Formlinge vertikal aufstehen und in der Plattform (PF)
des Brennwagens verankert sind. Die Füße (14a) der Stützständer (14) sind lösbar in Tragstützen 1,2 einsetzbar, die
ihrerseits von der Wärmedämmschicht der Plattform PF des
Brennwagens umhüllt sind und auf im Tragrahmen des
Brennwagens angeordneten Fundamenttraversen (9) verschoben und festgelegt werden können.

Fig. 1

EP 0 081 046 A2

Dr. Norbert Steuler, 5410 Vallendar/Rhein

Brennhilfsmittelbesatz für das einlagige Brennen keramischer
Formlinge (Fliesen).

Die Erfindung bezieht sich auf einen Brennhilfsmittelaufbau
für das einlagige Brennen keramischer Formlinge, insbesondere
Fliesen oder andere Platten mit oberhalb der Wärmedämmschicht
der Plattform des Brennwagens vertikal aufstehenden, in der
Plattform verankerten Stützständern und Trag        körpern
für die Formlinge.

Bei einer bekannten Brennhilfsmittelbesatz-Ausbildung dieser
Art (DE-OS 2063486) ist das Format dieser Brennhilfsmittelaufbauten dem Flächenmaß der zu brennenden Formlinge angepaßt,
d.h. so gehalten, daß ein oder mehrere Formlinge ein und desselben Formats in Länge und Breite auf diesem einen Tragrost
aufliegen. Der Tragrost bietet mit seiner festliegenden Auflageebene die Gewähr dafür, daß die Formlinge eben aufliegen
und sich nicht durchbiegen. Etwaige Höhenunterschiede zwischen
den Auflageebenen der einzelnen Tragroste, die sich daraus
ergeben, daß die den gesamten Brennhilfsmittelaufbau bildenden Stützen und Ständer der Tragroste auf dem verhältnismäßig
weichen Material der Wärmedämmschicht der Plattform des Brennwagens aufliegen, können sich deshalb nicht nachteilig auswirken. Sollen jedoch mit einem Brennhilfsmittelbesatz nicht
nur Platten, z.B. Fliesen in einem Standardformat, z.B. 150
x 150 mm, sondern andere Formate, insbesondere auch rechteckige mit kleineren und vor allen Dingen mit größeren Kantenabmessungen gebrannt, also die Brennöfen wahlweise mit
verschiedenen Sätzen von Formaten beschickt werden, dann
müssen bei rationeller Ausnutzung der Nutz-Besatzfläche des
Brennwagens und ohne Auswechseln der Brennhilfsmittelbesätze
entweder größere Tragroste verwendet oder mehrere solcher
Tragroste kleineren Formats neben- und hintereinander angeordnet so zusammengestellt werden, daß sie gemeinsam eine ebene

- 2 -

Auflagefläche bilden. Diese ebene Auflagefläche muß dabei auch
im Dauerbetrieb standfest und planeben bleiben.

Für ein Plattensortiment, das aus kleinen und großen Formaten
mit entsprechenden Zwischengrößen besteht, müssen diese Auflageflächen sehr groß sein. Es genügt nicht, diese Flächen auf das
Maß der größten, in dem Sortiment enthaltenen Platte zu bringen.
Die erforderlichen Zwischengrößen bedingen erheblich größere
Auflageflächen, wenn die Nutzbesatzfläche rationell ausgenutzt
werden und ein Aufliegen der Platten auf benachbarten Tragrosten,
deren Auflageebenen Höhenunterschiede aufweisen können, vermieden werden soll. Rechnerisch müßte die Auflagefläche so bemessen
sein, daß ihre Teilung durch jede der Kantenlängen der im Sortiment enthaltenen Formate jeweils eine ganze Zahl ergibt. So
müßte z.B. jeweils für ein Sortiment, das Kantenlängen von 100,
150 und 200 mm umfaßt, die Auflagefläche ein Maß von 600 x 600 mm
aufweisen.

Bei Tragrosten dieser Größenordnung aus feuerfestem keramischen
Material entsteht aber ein Mißverhältnis zwischen den Brennhilfsmittel- und den Brenngutgewichten, das den Energieaufwand außerordentlich erhöht, weil die Querschnitte der Tragroste unverhältnismäßig groß sein müssen.

Mehrere Tragroste kleineren Formats setzen voraus, daß auch
unter Dauereinwirkung mechanischer und thermischer Kräfte die
einzelnen Tragroste, die zusammen eine ebene Auflagefläche bilden sollen, ihre Lage zueinander nicht ändern und die übrigen
Elemente des Brennhilfsmittelaufbaus, die als Tragelemente der
Tragroste ausgebildet sind, ebenfalls ihre Lage zueinander beibehalten. Dies ist aber nur dann mit Sicherheit gewährleistet,
wenn die Oberfläche der Plattform, auf der die Tragelemente verankert sind, planeben bleibt oder die Aufsatzstellen, auf denen
die Tragelemente aufstehen entsprechend positioniert sind und diese Position nicht ändern.

Bekannte Vorschläge zur Schaffung von Brennhilfsmittelaufbauten
gehen durchweg dahin, den Fußteil vertikal aufstehender säulenförmiger Stützständer fest in einem auf der Plattform des Brennwagens aufliegenden feuerfesten keramischen Besatz zu verankern,
und die Tragroste auf die oberen Stirnseiten der Stützständer
aufzulegen bzw. zu stecken oder auch die zu brennenden Platten
unter Verzicht auf besondere Tragroste direkt auf die, zu diesem
Zweck angespitzten Stützen aufzulegen. Diese Ausbildung weist
nicht nur den Nachteil auf, daß der einmal festgelegte Aufbau des
Brennhilfsmittels nicht geändert werden kann und der Ersatz einzelner, während des Betriebes beschädigter Stützständer schwierig ist, sondern den weitaus wesentlicheren Nachteil, daß solche
Stützständer erfahrungsgemäß nur wenige Ofenreisen überstehen,
da der über den feuerfesten Besatz aufstehende Teil der Stützständer während des Aufenthaltes im Brennofen schneller und
stärker mit Wärme aufgeladen wird, als der in den feuerfesten
Besatz der Wagenplattform eingesetzte Teil. Andererseits kühlen
die aufstehenden Abschnitte aber auch schneller ab, wenn der
Brennwagen den Ofen verlassen hat, die Stützständer bilden darüberhinaus Wärmebrücken, über die    dem massiven Besatz der
Brennwagenplattform bei jedem Ofendurchgang Wärme zugeführt wird,
die außerhalb des Ofens nur geringfügig abstrahlen kann, so daß
nach mehreren Ofenreisen der Besatz der Plattform so stark mit
Wärme aufgeladen ist, daß zwischen diesem und den schneller abkühlenden Stützständern eine erhebliche Temperaturdifferenz verbleibt. Die Stützständer brechen deshalb wegen des durch diese
Temperaturdifferenz bedingten ständigen Spannungswechsels sehr
bald an der Übergangsstelle in den Besatz ab.

Der Erfindung liegt die Aufgabe zugrunde, einen in der Plattform
des Brennwagens fest verankerten, jedoch auswechsel- und verstellbaren Brennhilfsmittelaufbau zu schaffen, der wahlweise Brennen
aller Platten eines Plattensortiments mit der einmal auf den

- 4 -

Brennwagen aufgebauten Besatzform unter rationeller Belegung
der Nutzbesatzfläche bei Verwendung von Tragkörpern oder Tragrosten gestattet, deren Auflagefläche das wärmewirtschaftlich
optimale Maß, das durch ein günstiges Verhältnis von Brenngutzu Brennhilfsmittelgewicht bestimmt wird, nicht übersteigt,
und dessen Standzeiten während des Betriebes und Wärmeisolierung
gegenüber der Brennwagenplattform gleich oder noch geringer
sind, als die der anfangs erwähnten, auf der Wärmedämmschicht
der Plattform aufliegenden, nicht in deren Besatz verankerten
Brennhilfsmittel.

Diese Aufgabe wird dadurch gelöst, daß die Füße der Stützständer lösbar in Tragstützen einsetzbar sind, die von der Wärmedämmschicht der Plattform des Brennwagens umhüllt, verschieb-
und festlegbar mit im Tragrahmen des Brennwagens angeordneten
Fundamenttraversen verbunden sind. Die Tragstützen können dabei
aus Zwischenstücken und Halterungen bestehen, wobei die Halterungen auf den Fundamenttraversen verschieb- und gegenüber
diesen, zusammen mit den Zwischenstücken vertikal verstellbar
sind. Die Fundamenttraversen können aus, durch Abstandshalter
voneinander getrennten, quer zur Fahrtrichtung des Brennwagens
parallel nebeneinander angeordneten Balkentraversen mit vorzugsweise Rechteckquerschnitt bestehen, die mit einer Schicht aus
wärmedämmendem Material ummantelt sind. Die Zwischenstücke
können parallel zu den Balkentraversen verlaufende, oben offene
Nuten aufweisen und die Füße der Stützständer in den Querschnitt
dieser Nuten einschiebbar sein. Bei Verwendung von zwei oder
mehr Stützständern, die einstückig mit einer horizontalen Traverse verbunden, eine Stützbrücke bilden, wobei auf die Traversen Tragleisten mit Tragnoppenspitzen auflegbar sind, können
nach einem weiteren Vorschlag der Erfindung die Traversen oben
offene Schlitzausnehmungen aufweisen, deren Wände einander gegenüberliegend, in der Form stumpfer Winkeleinschnitte eine Art
Rhombus bilden und die Tragleisten einen entsprechenden stumpfen
Winkelquerschnitt aufweisen, wobei an den Außenseiten der Traversen, unten im Bereich des Bodens der Schlitzausnehmungen Anschlagansätze mit geneigt verlaufenden Anschlagflächen angeordnet
sind. Die Tragnoppenspitzen sind dabei auf den beiden Langkanten
der Tragleiste angeordnet und weisen einen festgelegten Abstand
auf, der ein Rastermaß für die Verteilung der Tragnoppenspitzen
über die Nutzbesatzfläche der Brennwagenplattform, jeweils in
der Länge und der Breite der Fläche für sämtliche Kantenlängen
der Platten eines Plattensortiments bildet. Erfindungsgemäß entspricht dieses Rastermaß der Summe der Überstände zweier, in
einer Reihe nebeneinander liegender Platten über die Unterstützungspunkte durch die Tragnoppenspitzen und dem Zwischenraum zwischen
den Platten. Zwischen den zur Aufnahme der Tragleisten bestimmten
Schlitzausnehmungen oder Gruppen von diesen können oben offene,
u-förmige Schlitzausnehmungen für das Ein- und Ausbringen von,
die Platten untergreifenden Rostbalken einer Be- und Entladeeinrichtung angeordnet werden.

Die, die Füße der Stützständer tragenden Tragstützen lassen sich
durch entsprechendes Verschieben und Festlegen auf den Fundamenttraversen in die jeweils gewünschte Position innerhalb der Wärmedämmschicht der Plattform des Brennwagens einbringen. Die Fundamenttraverse, die eine große, ihre Biegefestigkeit sicherstellende
Querschnittsausbildung aufweisen kann, weil dafür unterhalb der
Wärmedämmschicht genügend Raum zur Verfügung steht, gewährleistet
dabei, daß alle mit der Fundamenttraverse verbundenen Stützständer eine gemeinsame, sich nicht ändernde Tragebene für die Platten
bilden, in die bei der erfindungsgemäßen Ausbildung der Tragstützen
aus Zwischenstück und Halterung die einzelnen Tragstützen mit den
daraufstehenden Stützständern sehr genau einjustierbar sind.

Da die Brennwagenplattform, abgesehen von den auf sehr kleine Abmessungen reduzierten Zwischenstücken für die Stützständer des
Brennhilfsmittelaufbaus, und abgesehen von ihrer Unterkonstruktion,
aus hoch wärmeisolierfähigem Material gebildet wird, kommt ein Verschleppen der Wärme der im Laufe der aufeinanderfolgenden
Ofenreisen aufgeladenen wärmeleitfähigen Teile aus dem Brennofen sehr bald zum Stillstand, weil die Isolierung der Brennwagenplattform das Abstrahlen der Wärme außerhalb des Ofens
verhindert. Das Temperaturgefälle zwischen den wärmeleitfähigen
Teilen der Brennwagenplattform und dem Innenraum des Ofens hält
sich deshalb in engen Grenzen. Die Nutenverbindung der Füße der
Stützständer mit den Zwischenstücken aus feuerfestem Material
verhindert das Entstehen von Spannungen innerhalb der Stützständer infolge unterschiedlicher Aufheizung und erlaubt es,
die darunterliegenden Teile der Halterung aus wärmeleitfähigem
Material, wie Eisenblech, herzustellen, wobei die Ummantelung
der die Halterungen tragenden Balkentraversen es auch gestattet,
diese Traversen aus Stahl herzustellen.

Bei Anwendung von Stützbrücken mit Traversen, die Schlitzausnehmungen und in diese eingesetzte stumpfwinklige Tragleisten
mit Tragnoppenspitzen aufweisen, ist eine Trennung von Tragleiste und Stützbrücke durch beim Abheben der gebrannten Platten
wirksam werdende vertikale Kräfte nicht mehr möglich. Diese
vertikalen Kräfte können nur noch eine Kippbewegung der Tragleiste hervorrufen. Dies hat den Vorteil, daß das Herausheben
von Teilen des Brennhilfsmittelaufbaus aus den Halterungen beim
Entladen vermieden wird, wenn eine Platte, auf deren Unterseite
Rohglasur gelangt ist, im Brand an ihrer Auflage anbackt. Eine
solche punktförmige Verbindung der Platten mit den Tragnoppenspitzen der Tragleisten wirkt nur noch als eine Sollbruchstelle,
wenn die winklige Tragleiste, die mit geringem Spiel in den
Schlitzausnehmungen lagert, angehoben wird und dabei eine Zwangskippbewegung ausführt, bricht die Glasurverbindung zwischen
Tragnoppenspitze und Plattenunterseite ab. Die geneigt verlaufenden Flächen der Anschlagansätze an den Außenseiten der Traversen,
auf die sich die Innenseiten der Tragleisten dabei abstützen,
unterstützen diesen Vorgang, weil die Traversen mit den Füßen
der Stützständer fest in den Nuten der Zwischenstücke sitzen

- 7 -

und ein Herausheben der Traversen mit den Stützständern aus der Brennwagenplattform verhindern. Ein weiterer Vorteil der Ausbildung der Schlitzausnehmungen und der Tragleisten mit den Tragnoppenspitzen an den Langkanten besteht darin, daß die Tragleisten mit in unterschiedliche Richtung weisenden Noppenspitzen in die Schlitzausnehmungen eingesetzt werden können, wobei sich die Abstände zwischen den Noppenspitzen zweier nebeneinanderliegender Tragleisten variieren lassen. Durch Drehen um 180° läßt sich, z.B. bei Beschädigung von Tragnoppenspitzen während des Betriebes die gleich ausgebildete andere Langkante in Tragstellung bringen. Der stumpfwinklige Querschnitt der Tragleisten erhöht deren Biegefestigkeit und erlaubt die Verwendung besonders geringer und daher leichter Materialstärken.

Das Rastermaß wird durch die empirisch ermittelte Standfestigkeit der Platte beim Brennen bestimmt. Bei Formatwechsel innerhalb eines Sortiments ist es nicht mehr nötig, den Brennhilfsmittelaufbau umzurüsten. Andererseits besteht die Möglichkeit, durch Herausnehmen bzw. Umsetzen der Tragleisten die Stützweiten dann zu vergrößern und gleichzeitig das Brennhilfsmittelgewicht zu verringern, wenn Platten gebrannt werden sollen, die einer größeren Biegebeanspruchung standhalten.

Die Erfindung wird anhand der in der Zeichnung dargestellten Ausführungsbeispiele näher erläutert. In der Zeichnung zeigen:

Fig. 1 die Teilansicht des Brennhilfsmittels von der Seite gesehen,
Fig. 2 die Vorderansicht von Fig. 1,
Fig. 3 die Seitenansicht einer besonderen Ausbildungsform des Brennhilfsmittels,
Fig. 4 die Vorderansicht von Fig. 3,
Fig. 5 die Vorderansicht einer Einzelheit aus Fig. 3 und
Fig. 6 die Seitenansicht von Fig. 5 (Schnitt A-A durch Fig. 5)

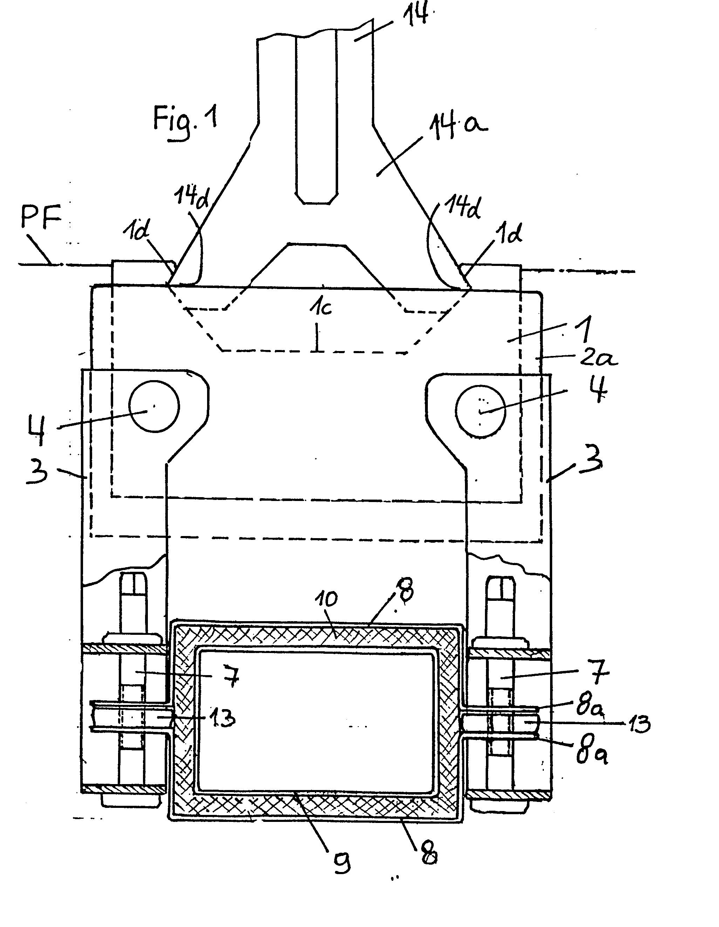

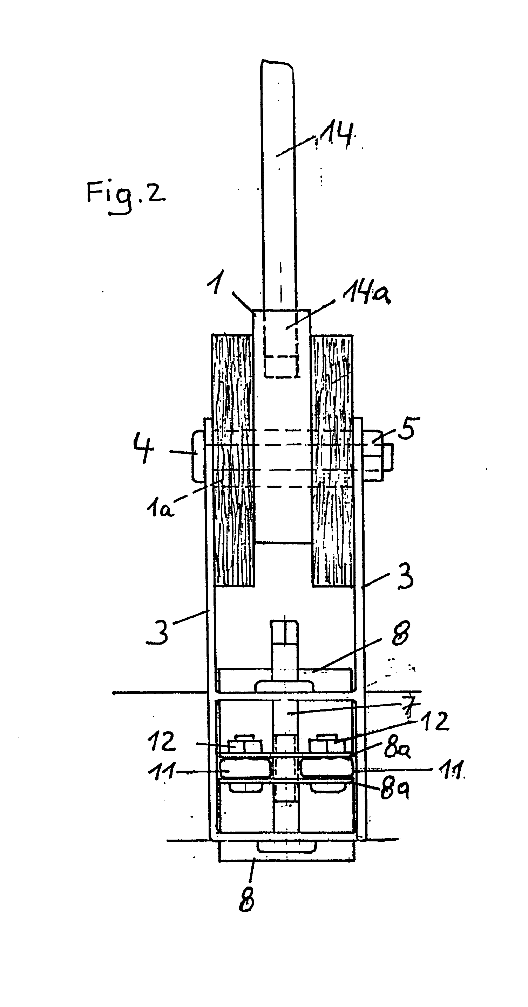

Wie aus Fig. 1 und 2 hervorgeht, wird das Zwischenstück 1 aus feuerfestem Werkstoff von einem Paar Isolierplatten 2a und 2b ein-

gefaßt. Diese Teile befinden sich unterhalb der strichpunktiert angedeuteten Oberseite der Plattform PF des Brennwagens und werden gemeinsam an den gegenüberliegenden schmalen Stirnseiten von Halteschienen 3 eingefaßt und mittels durch diese Schienen 3 und entsprechende Bohrungen hindurchgeführte Schraubenbolzen 4 mit Muttern 5 zusammengehalten. Die Bohrung 1a im Zwischenstück 1 ist dabei als Längsschlitz ausgebildet. Die Halteschienen 3 sind über einen durch sie und die Flanschlaschenpaare 8a einer Rohrschelle 8 hindurchgeführte Stellgewindebolzen 7 mit der rechteckrohrförmigen Balkentraverse 9 verbunden. In den Flanschlaschenpaaren 8a sitzen noch Rohrschellenschraubenbolzen 11 mit Muttern 12 und eine feststehende Gewindenuß 13 für den Stellgewindebolzen 7.

Das Zwischenstück 1 weist eine nach oben offene Nut 1c mit hinterschnittenen Bereichen 1d auf. In die Nut 1c ist der Fuß 14a des Stützständers 14 eingeschoben und durch die in die hinterschnittenen Abschnitte 1d der Nut 1c eingreifenden Ansätze 14d gesichert.

Die Balkentraversen 9 sind auf nicht dargestellte Weise im Abstand in einer Ebene quer zur Fahrtrichtung des Brennwagens liegend an einer gemeinsamen in Fahrtrichtung des Wagens liegenden Mitteltraverse angeordnet. Auf den Balkentraversen 9 können die Rohrschellen 8 mit den Halteschienen 3 und den von diesen gehaltenen Fundamentzwischenstücken 1 verschoben und durch Anziehen der Muttern 12 in der vorgesehenen Position festgelegt werden. Nach Einschieben der Stützständer 14 in die Nut 1c des jeweiligen Zwischenstücken kann der Stützständer 14 mittels der Stellgewindebolzen 7 auf die gewünschte Höhenlage gebracht und justiert werden. Nach der Justierung können die Zwischenstücke 1, die bereits allseits in wärmedämmendem Material 10 eingebettet sind, noch mit solchem Material abgedeckt werden, wobei der in die Nut 1c eintauchende Fuß 14a in der gleichen Weise aufgewärmt und abgekühlt wird, wie der Stützständer selbst.

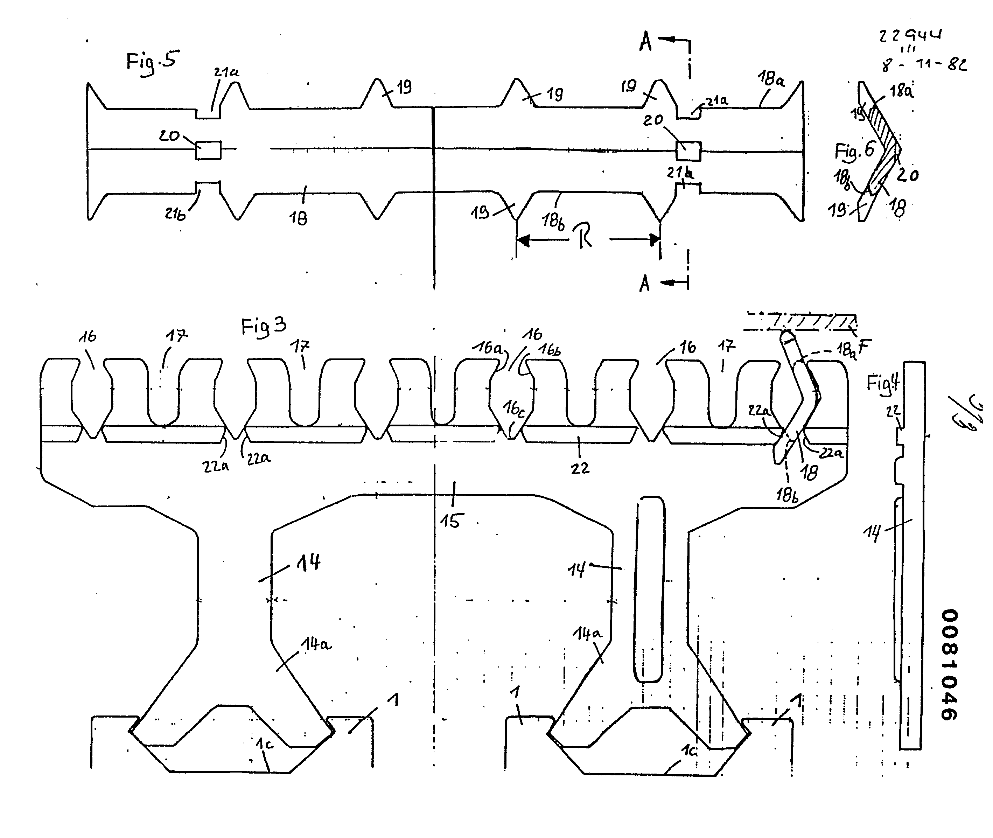

Bei der Ausbildung nach den Fig. 3 und 4 sind die Stützständer 14 durch eine Traverse 15 zu einer einstückigen Stützbrücke verbunden. In der Traverse 15 sind Schlitzausnehmungen 16 und U-förmige Ausnehmungen 17 vorgesehen. Die gegenüberliegenden Wände 16a und 16b der Schlitzausnehmungen 16 verlaufen in der Form stumpfer Winkeleinschnitte und bilden gemeinsam eine Art Rhombus. In diese Schlitzausnehmungen 16 werden Tragleisten 18, die einen entsprechenden stumpfen Winkelquerschnitt aufweisen, eingesetzt. Aus den Fig. 5 und 6 geht hervor, daß die Tragleisten 18 an ihren beiden äußeren Langkanten 18a und 18b in einem festgelegtem Abstand R Tragnoppenspitzen 19 aufweisen. Ferner sind an der äußeren Winkelkante 18b und an den Langkanten 18a Nutausnehmungen 20 bzw. 21a und 21b angeordnet, deren Breite der der Wandungen 16a bzw. 16b der Schlitzausnehmungen 16 entspricht. Beim Einsetzen der Tragleisten 18 in die Schlitzausnehmungen 16 greifen diese Wandungen 16a bzw. 16b und der Boden 16c der Schlitzausnehmung 16 in diese Nutausnehmungen 20 bzw. 21a und 21b ein und sichern die Tragleisten 18 gegen Längsverschiebung. An den Außenwänden der Tragleisten 18 sind (vgl.Fig.4) unten seitlich des Bodens 16c der Schlitzausnehmungen 16 Anschlagansätze 22 mit geneigten Anschlagflächen 22a vorgesehen, an denen die Innenflächen der Tragleisten zur Anlage gelangen. Es wird dadurch eine stabile Lage der Tragleisten 18 bei aufliegender Platte F(vgl. die strichpunktierte Darstellung in Fig. 3)erreicht, und wie bereits vorher erläutert, das Abbrechen von Glasurtropen zwischen Platte F Tragleiste 18 erleichtert.

Der das Rastermaß R bildende Abstand zwischen den Tragnoppenspitzen 19 (Fig.5) der die aus der empirisch ermittelten größtmöglichen Stützweite der jeweils zu brennenden Platten nicht überschreitet, muß berücksichtigen, daß jede Platte eines Sortiments unabhängig davon, welchen Platz sie in den mit untereinander gleichen Zwischenräumen gebildeten Reihen in Länge oder Breite der Nutzbesatzfläche der Brennwagenplattform einnimmt, nach allen vier Seiten mit ihren Kanten frei über die Tragnoppenspitzenreihe hinausragt. Das Maß dieses Überstandes ist ebenso wie das der Stützweiten zwischen den Tragnoppenspitzen durch die Biegemomentgröße nach oben begrenzt, die die Platte ohne Durchbiegung aufzunehmen vermag. Ferner müssen die Zwischenräume
zwischen den Plattenkanten mindestens so groß sein, daß ein
Zusammenbacken auch dann nicht vorkommt, wenn sich die Platten
geringfügig gegeneinander verschieben. Eine optimale Verteilung
der Tragnoppenspitzen über die Breite und Länge der Nutzbesatzfläche der Brennwagenplattform läßt sich unter Einhaltung eines
Rastermaßes R erreichen, das sich auf nachstehende Weise errechnen läßt:

In den nachstehenden Formeln sind:

I Die unbekannten, zu errechnenden Größen:

  R = das Rastermaß

  Y = der Überstand der Platten über die Tragnoppenspitzen

  Z = der Zwischenraum zwischen den Platten

II die feststehenden unveränderlichen Größen a = die Länge der Nutzbesatzfläche der Brennwagenplattform b = die Breite " "                              " "

III die variablen, aber bekannten Größen

  K = die Kantenlängen der Platten des Sortiments

  $n_K$ = die Anzahl der Kantenlängen über die Länge oder die
      Breite der Nutzbesatzfläche der Brennwagenplattform

  $n_{St}$ = die Anzahl der Tragnoppenspitzen unter einer Platte,
      gezählt in Längsrichtung der Brennwagenplattform oder
      quer zu dieser.

1.) $R = \dfrac{K+Z}{n_{St}}$ 　　　　　　　　2.) $R = 2Y + Z$

　　　　3.) $Y = \dfrac{R-Z}{2}$

4a) $Z_a = \dfrac{a - n_k \cdot K}{nK}$ 　　　　　　4b) $Z_b = \dfrac{b - \bar{n}_k \cdot K}{nK}$

## Zu II a und b

Über die Länge und Breite der Nutzbesatzfläche der Brennwagenplattform ergeben sich gleiche Rastermaße nur dann, wenn die
Seiten a und b der Nutzbesatzfläche der Brennwagenplattform
sich verhalten wie 1:1 oder 2:1. Abweichungen davon ergeben
für Länge und Breite unterschiedliche Rastermaße, die jedoch
in Kauf genommen werden können, soweit das Biegemoment aufgenommen wird.

## Zu III "K"

Kantenlängen der Platten eines Sortimentes, die nicht aufeinander abgestimmt sind, können unterschiedliche Überstände und
Zwischenräume ergeben. Auch diese Abweichungen sind unbedenklich,
solange die Überstände das durch das Biegemoment begrenzte Höchstmaß nicht übersteigen und die Zwischenräume zwischen den Platten
nicht kleiner sind als das betrieblich geforderte Mindestmaß.
Andernfalls müssen die Kantenlängen des Sortimentes entsprechend
abgestimmt werden, und zwar nach den Formeln:

$$K_1 = n \cdot R + (R-Z)$$

$$K_2 = n + 1 \cdot R + (R-Z)$$

$$K_3 = n + 2 \cdot R + (R-Z)$$

Für "Z" kann alsdann die betrieblich optimale Größe eingesetzt
werden: Da R-Z = 2Y ist, sind Z und Y im Falle der Anpassung
konstante Größen für alle Kantenlängen der Platten des Sortimentes.

## Zu III "$n_{St}$"

Die Anzahl der Tragnoppenspitzen entlang einer Plattenkante ist
abhängig:

1. von der jeweiligen Länge der Plattenkante und
2. von der Standfestigkeit des Plattenscherbens im Feuer, die die
maximale Stützweite bestimmt, bei der die Platte das auftretende
Biegemoment ohne Beeinträchtigung der Planebenheit aufzunehmen
vermag. Diese Größe wird durch Reihenversuche empirisch ermittelt.

Der Abstand zwischen zwei Tragnoppenspitzen darf diese Größe nicht überschreiten. Danach bestimmt sich die Anzahl der Tragnoppenspitzen unter einer Platte entlang einer Kante.

Ein Sortiment mit abgestimmten Kanten errechnet sich bei einem Rastermaß von X = 53.3 mm und einem Zwischenraum zwischen den Platten von Z = 10 mm nach den unter III "K" angegebenen Formeln wie folgt:

$$K_1 = 1 \times 53.3 + (53.3-10) = 96.6 \text{ mm (statt 100 mm)}$$

$$K_2 = 2 \times 53.3 + (53.3-10) = 149.9 \text{ mm (statt 150 mm)}$$

$$K_3 = 3 \times 53.3 + (53.3-10) = 203.2 \text{ mm (statt 200 mm)}$$

$$K_4 = 4 \times 53.3 + (53.3-10) = 256.5 \text{ mm (statt 250 mm)}$$

$$K_5 = 5 \times 53.3 + (53.3-10) = 309.8 \text{ mm (statt 300 mm)}$$

Die Überstände "Y" aller Formate dieses Sortimentes sind bei einem Rastermaß R = 53.3 mm und bei einheitlichen Zwischenräumen Z = 10 mm nach der Formel

$$Y = \frac{R-Z}{2} = \frac{53.3-10}{2} = 22.65 \text{ mm}$$

Dr. Norbert Steuler, D-5410 Vallendar/Rhein

<u>Patentansprüche</u>

1. Brennhilfsmittelaufbau für das einlagige Brennen keramischer
   Formlinge, insbesondere Fliesen oder andere Platten mit oberhalb der Wärmedämmschicht der Plattform des Brennwagens vertikal aufstehenden, in der Plattform verankerten Stützständern
   und Tragkörpern für die Formlinge,
   d a d u r c h   g e k e n n z e i c h n e t ,
   daß die Füsse (14a) der Stützständer (14) lösbar in Tragstützen (1,3) einsetzbar sind, die von der Wärmedämmschicht
   der Plattform (PF) des Brennwagens umhüllt, verschieb- und
   festlegbar mit im Tragrahmen des Brennwagens angeordneten
   Fundamenttraversen (9) verbunden sind.

2. Brennhilfsmittelaufbau nach Anspruch 1,
   d a d u r c h   g e k e n n z e i c h n e t ,
   daß die Tragstützen (1,3) aus Zwischenstücken (1) und Halterungen (3) bestehen, wobei die Halterungen (3) auf den
   Fundamenttraversen (9) verschieb- und gegenüber diesen mit
   den Zwischenstücken (1) vertikal verstellbar sind.

3. Brennhilfsmittelaufbau nach Anspruch 1,
   d a d u r c h   g e k e n n z e i c h n e t ,
   daß die Fundamenttraversen (9) aus, durch Abstandshalter
   voneinander getrennten, quer zur Fahrtrichtung des Brennwagens
   parallel nebeneinander angeordneten Balkentraversen (9) mit
   vorzugsweise Rechteckquerschnitt bestehen.

4. Brennhilfsmittelaufbau nach Anspruch 3,
   d a d u r c h   g e k e n n z e i c h n e t ,
   daß die Fundamenttraversen (9) mit einer Schicht (10) aus
   wärmedämmendem Material ummantelt sind.

5. Brennhilfsmittelaufbau nach den Ansprüchen 1-4,
d a d u r c h   g e k e n n z e i c h n e t ,
daß die Zwischenstücke (1) parallel zu den Balkentraversen (9)
verlaufende, oben offene Nuten (1c) aufweisen und die Füße (14a)
der Stützständer (14) in den Querschnitt dieser Nuten (1c)
einschiebbar sind.

6. Brennhilfsmittelaufbau nach Anspruch 5,
d a d u r c h   g e k e n n z e i c h n e t ,
daß die Füße (14a) seitlich auskragende Ansätze (14d) aufweisen, die dem Querschnitt hinterschnittener Abschnitte (1d)
der Nuten (1c) angepaßt sind.

7. Brennhilfsmittelaufbau nach den Ansprüchen 1-6,
unter Verwendung von zwei oder mehr Stützständern, die
einstückig, mit einer horizontalen Traverse verbunden, eine
Stützbrücke bilden, wobei auf die Traversen Tragleisten mit
Tragnoppenspitzen auflegbar sind,
d a d u r c h   g e k e n n z e i c h n e t ,
daß die Traversen (15) oben offene Schlitzausnehmungen (16)
aufweisen, deren Wände (16a, 16b) einandergegenüberliegend
in der Form stumpfer Winkeleinschnitte eine Art Rhombus bilden und die Tragleisten (18) einen entsprechend stumpfen
Winkelquerschnitt aufweisen.

8. Brennhilfsmittelaufbau nach Anspruch 7,
d a d u r c h   g e k e n n z e i c h n e t ,
daß die Tragnoppenspitzen (19) auf den beiden Langkanten (18a,
18 b) der Tragleiste (18) angeordnet sind und einen festgelegten Abstand (R) aufweisen.

9. Brennhilfsmittelaufbau nach Anspruch 8,
daß der festgelegte Abstand (R) zwischen den Tragnoppenspitzen (19) ein Rastermaß für deren Verteilung über die Nutzbesatzfläche der Brennwagenplattform jeweils in der Länge
und der Breite der Fläche für sämtliche Kantenlängen der
Platten eines Plattensortiments bildet.

10. Brennhilfsmittelaufbau nach den Ansprüchen 8 und 9
    d a d u r c h   g e k e n n z e i c h n e t ,
    daß das Rastermaß (R) der Summe der Überstände zweier in
    einer Reihe neben- oder hintereinanderliegender Platten (F)
    über die Unterstützungspunkte durch die Tragnoppenspitzen (19)
    und dem Zwischenraum zwischen den Platten (P) entspricht.

11. Brennhilfsmittelaufbau nach einem oder mehrerem der
    Ansprüche 1 - 7,
    d a d u r c h   g e k e n n z e i c h n e t ,
    daß zwischen den zur Aufnahme der Tragleisten (18) bestimmten
    Schlitzausnehmungen (16) oder Gruppen dieser Ausnehmungen oben
    offene, U-förmige Schlitzausnehmungen (17) für das Ein- und
    Ausbringen von die Platten (F) untergreifenden Postbalken
    einer Be- und Entladeeinrichtung angeordnet sind.

12. Brennhilfsmittelaufbau nach Anspruch 7,
    d a d u r c h   g e k e n n z e i c h n e t ,
    daß die Tragleisten (18) an der äußeren Winkelkante
    und/oder an den äußeren Langkanten (18a, 18b) der Breite
    der Wandungen (16a, 16b) der Schlitzausnehmungen (16) ange-
    paßte Nutausnehmungen (20 bzw. 21a, 21b) aufweisen.

13. Brennhilfsmittelaufbau nach Anspruch 7,
    d a d u r c h   g e k e n n z e i c h n e t ,
    daß an den Außenseiten der Traversen (15), unten im Bereich
    des Bodens (16c) der Schlitzausnehmungen (16) Anschlagansätze (22) mit geneigt verlaufenden Anschlagflächen (22a)
    angeordnet sind.

14. Brennhilfsmittelaufbau nach den Ansprüchen 1-5,
d a d u r c h  g e k e n n z e i c h n e t ,
daß das Zwischenstück (1) als eine zwischen Isolierplatten (2a,
2b) liegende Scheibe ausgebildet ist, die zusammen mit den
beiden Isolierplatten (2a, 2b) an den Schmalseiten von Halteschienen (3) und durch gemeinsame Bohrungen geführte Schraubenbolzen (4) mit Muttern (5) gehalten sind, wobei die Halteschienen (3) über Ansatzlaschen ⌐ und einen Stellgewindebolzen (7) vertikal verstellbar mit Flanschlaschen (8a)
einer die Balkentraverse (9) umfassenden Rohrschelle (8) verbunden sind.

Fig. 1

Fig.2

0081046

3/3

Fig. 5, Fig. 6, Fig. 3, Fig. 4